# FASCICULE DE BREVET EUROPEEN

(11) **EP 1 889 682 B1**
(45) Date de publication et mention de la délivrance du brevet: **23.03.2011**
(21) Numéro de dépôt: 07113767.3
(22) Date de dépôt: 03.08.2007
(51) Int. Cl.: B23K 26/34, B23K 31/12, G01N 3/02, G01N 3/32, G01N 33/20

(54) **Méthode pour évaluer la résistance en fatigue de joints soudés avec détermination de la contrainte la plus faible entraînant la rupture avec un taux de probabilité de rupture t**
Verfahren zum Erfassen der Dauerfestigkeit einer Schweissverbindung mit Bestimmung des niedrigen Spannungstandes für eine Bruchprobabilität t
Method for estimating the fatigue strength of welded joints with determination of the lowest stress level leading to the fracture of the specimen with a fracture probability of t

(30) Priorité: 03.08.2006 FR 0653274
(43) Date de publication de la demande: 20.02.2008
(73) Titulaire: SNECMA, 75015 Paris (FR)
(72) Inventeur: Mons, Claude, Marcel, 77176 Savigny le Temple (FR)
(74) Mandataire: David, Daniel

(56) Documents cités:
- EP-A- 1 696 220
- US-A1- 4 343 424
- US-A1- 4 402 227
- US-A1- 2004 112 141
- W.R. OATES ET AL: "Welding Handbook - Vol. 4 - Materials and applications, part 2" 1998, AMERICAN WELDING SOCIETY , MIAMI, FL 33126 USA 087171 , XP002425725 * page 500 - page 506 * * page 514 - page 519 *
- DATABASE WPI Week 199027 Derwent Publications Ltd., London, GB; AN 1990-207552 XP002427630 -& SU 1 509 208 A (AS METAL SUPERPLAST) 23 septembre 1989 (1989-09-23)

## Description

La présente invention concerne le domaine du soudage et, plus particulièrement, une méthode pour évaluer la résistance en fatigue de joints soudés (voir revendication 1).

Il existe différentes méthodes pour assembler deux pièces métalliques. Notamment, les pièces peuvent être assemblées par le biais d'un apport de chaleur entraînant la fusion ou la diffusion du métal. On connaît par exemple les techniques de soudage TIG, plasma ou laser ou encore par friction inertielle. Par ailleurs, des manques de métal sur une pièce résultant par exemple d'une usure peuvent être réparés par rechargement de matière au moyen d'un métal en fusion. On met en oeuvre dans ce cas également des techniques de soudage TIG, plasma, micro-plasma ou autres.

Quand on considère le domaine des turbomachines, les pièces métalliques ainsi rechargées ou assemblées sont souvent soumises à des vibrations, des contraintes ou déformations se répétant selon des cycles. Ces sollicitations en fatigue peuvent entraîner la ruine des assemblages soudés de façon prématurée.

Dans la majorité des cas, les analyses fractographiques post mortem montrent que les pièces présentaient à l'origine des défauts initiant des fissures de fatigue. Ce sont des défauts de petite taille, du type soufflures ou inclusions, en général trop petits pour être détectables par les moyens usuels de contrôle non destructif que l'on désigne souvent par le sigle CND. Ces moyens, selon les alliages et les géométries d'assemblages, utilisent des techniques mettant en oeuvre notamment la radiographie, les ultrasons ou encore la magnétoscopie.

Il est connu par l'homme du métier que les défauts pertinents en fatigue, c'est-à-dire les défauts qui sont à l'origine des ruptures des assemblages, ont des tailles de l'ordre de 5 à 10 fois plus petites que celles des défauts détectables par les moyens CND avec une probabilité suffisante. Ainsi de tels défauts peuvent avoir une taille de 40 à 70µm alors que les défauts détectables par les moyens CND ont une taille de l'ordre de 150 à 300µm.

Cet écart ne permet pas de créer un lien objectif entre les défauts pertinents en fatigue, donc la durée de vie de la soudure, et les défauts détectés.

Ce point pénalise les assemblages par fusion, par l'introduction de facteurs de sécurité, et il ne permet pas, par la mise en oeuvre de moyens de contrôle non destructif, de statuer de façon objective entre deux types de méthodes de soudage au travers de leurs défauts. Toute soudure présentant des défauts inférieurs au seuil de détection par les moyens CND sera jugée de manière identique, que les défauts générés soient proches du seuil ou beaucoup plus petits. Le lien avec la tenue en fatigue n'est donc pas objectif.

L'invention a pour objectif la mise au point d'une méthode qui permet de garantir les niveaux minimaux de fatigue pour des défauts non détectables par les moyens de contrôle non destructifs, CND.

L'invention parvient à cet objectif à partir de la démarche qui a consisté à déterminer l'influence des défauts de soudure sur la tenue en fatigue de joints soudés selon l'un des procédés de soudage mentionnés plus haut.

Ainsi conformément à l'invention, la méthode pour évaluer la résistance en fatigue de joints soudés est définie dans la revendication 1.

De préférence la méthode concerne une technique de soudage mettant en oeuvre un faisceau laser pour fondre l'alliage.

L'expression « joints soudé » vise aussi bien les assemblages de pièces entre elles que le rechargement par apport de matière. En effet, un joint soudé forme la jonction de pièces dans un assemblage mais l'invention concerne aussi le rechargement par apport de métal en fusion de parties manquantes d'une pièce. Par exemple l'invention s'applique dans le cadre de la réparation d'aubes de turbomachine en alliage de titane. Dans ce cas, on procède selon une technique connue de soudage à la reconstruction du sommet de pales par dépôt de métal en fusion dans un faisceau laser, selon une autre technique connue, on soude une pièce sur la partie manquante d'une pale en réparation.

Connaissant la valeur de contrainte minimale, on détermine le taux d'abattement en résistance du joint soudé par rapport à la matière saine, c'est-à-dire la matière en dehors de la zone affectée thermiquement et qui n'a pas subi de fusion ou d'altération lors du soudage du cordon.

Conformément à une autre caractéristique on réalise un joint soudé sur les éprouvettes dont le volume est compris entre 10 et 100 % du joint soudé sur les pièces à assembler.

L'invention s'applique en particulier à l'évaluation en fatigue de joints soudés en alliage de titane ; le nombre d'éprouvettes statistiquement significatif est alors compris entre 35 et 45; de préférence 40.

Conformément à une autre caractéristique, le taux de probabilité t est inférieur à 1 %, il correspond à la plage de normalité s'étendant entre les dimensions à la moyenne moins trois écarts types et la moyenne plus trois écarts-types. Plus particulièrement le niveau de confiance est de 99,7%.

Ainsi la méthode telle que revendiquée présente l'avantage de donner un accès aux impacts réels, sur la fatigue des assemblages soudés, des défauts pertinents alors qu'on ne peut les mesurer en CND courant.

Elle donne au fabricant de pièces soudées la capacité à :
- afficher des minima de dimensionnement, et
- discriminer des méthodes d'assemblage ou de rechargement donnant des défauts de tailles variables, mais situés en dessous des seuils de détection par la voie CND et ainsi de parvenir à un choix objectif de procédés.

On réalise un nombre suffisant statistiquement d'éprouvettes avec deux informations majeures : valeur de la durée de vie et taille des défauts à l'origine. Ces deux distributions de résultats montrent que les défauts pertinents dans les cas d'application de la méthode : soudage par faisceau d'électron sur des toiles en alliage de titane TA6V ou rechargement par laser sur des aubes en Ti17, ont des tailles très en dessous du seuil de détection : 40 à 70 µm pour 300 µm, qu'ils sont reproductibles et que leur distribution gère la durée de vie ; la distribution statistique de défauts et la distribution de durée de vie sont de même nature. On peut donc, pour un set de paramètres de soudure ou de rechargement, définir une durée de vie minimale de l'assemblage pour une fiabilité donnée. La comparaison des résultats avec le minimum déterminé par les essais de base donne donc une valeur fiable de l'abattement en fatigue lié au procédé mis en oeuvre avec les paramètres industriels, et un lien avec la distribution de défauts.

Dans la pratique, la quantification de sources de soudage ou de rechargement selon des paramètres différents passe par des essais de fatigue et des examens fractographiques de distributions de défauts pertinents. On considère que les abattements de dimensionnement sont identiques selon les deux mises en oeuvre.

On connaît le brevet US 2004/112141, qui est considéré comme représentant l'état de la technique la plus proche, mais la méthode décrite concerne uniquement les aciers et vise la taille efficace des défauts inclusionnaires de l'hydrogène et la prise en compte de ce facteur dans les formulations associées.

L'analogie entre cette méthode et celle de l'invention se rapporte à la prise en compte de la distribution des défauts de propreté inclusionnaires mais il n'y a pas d'autre point commun. En particulier, on ne cherche nullement à déterminer une quelconque inclusion maximale dans l'échantillon analysé.

Dans l'invention, on part de la constatation que la distribution utilisée est décrite de façon statistique par une courbe normale, et que cette courbe est représentative de la production au travers de la maîtrise statistique du procédé de soudage, les défauts étant dans ce cas des soufflures et non des inclusions.

Par ces analyses la taille maximale des soufflures a + 3 écarts types dans les cordons était de 100 à 110µm dans les conditions de fabrication considérées. L'intérêt de la méthode selon l'invention réside dans le fait que ces soufflures ne sont pas détectables par les moyens usuels, et que cette approche permet de prendre en compte des défauts beaucoup plus petits que ceux donnés par le seuil de détection des méthodes non destructives usuelles ; cette approche permet donc de justifier des durées de vie supérieures à celles prenant en compte les seuils de détectabilité.

La détermination de cette taille, la disponibilité des courbes de fatigue sur défaut et la dispersion des résultats par niveaux de fatigue permet de donner la valeur du facteur de correction à prendre sur les valeurs minimale et moyenne des courbes de dimensionnement, cela sans recourir à un calcul intégrant la dureté du matériau (calcul qui n'a de sens que pour les aciers et pour la propagation de fissures).

On connaît
- D2 « W.R. OATES ET AL : « Welding Handbook - Vol. 4 - Materials and applications, part 2" 1998, AMERICAN WELDING SOCIETY, MIAMI, FL 33126 USA 087171, XP002425725 *page 500 - page 506* *page514 - page 519*" qui présente d'une façon générale la métallurgie du soudage du titane.
- US 4343424 qui porte sur un test de fissuration appliqué sur un joint soudé d'un métal tel qu'un alliage de titane.

On décrit maintenant la méthode d'évaluation de la tenue en fatigue d'une technique de soudage déterminée appliquée à un exemple en référence aux dessins annexés sur lesquels
La figure 1 représente une éprouvette réalisée selon une technique de soudage dont on souhaite déterminer l'abattement en fatigue,
La figure 2 est une fractographie d'une éprouvette de la figure 1,
La figure 3 est un diagramme représentant la distribution des défauts par fréquence d'occurrence,
La figure 4 est, pour un matériau donné, un diagramme de tests de fatigues cycliques où chaque point correspond à un essai sur une éprouvette avec en abscisse le nombre de cycles à la rupture, sur une échelle logarithmique, et en ordonnées la valeur de la contrainte alternée appliquée, en N/m².

On réalise les éprouvettes selon, par exemple, la méthode suivante. On usine une cavité 12 dans une plaque métallique 10 de forme parallélépipédique et on comble cette cavité avec l'alliage considéré de façon à former un joint soudé 16. Pour les tests on a rechargé en alliage TA6V des plaques en alliage Ti 17.

L'opération de rechargement est effectuée selon la même technique de soudage que celle mise en oeuvre pour la réparation de pièces industrielles visée. On emploie le même matériel avec les mêmes paramètres de soudage. L'invention s'applique généralement aux modes de soudage que l'on maîtrise complètement et qui peuvent être définis par des paramètres significatifs. Pour un dépôt de métal avec un chauffage au moyen d'un faisceau laser, les paramètres sont en particulier ceux qui caractérisent le faisceau : type, longueur d'onde, distance focale, homogénéité du faisceau, densité d'énergie, distance à la cible, protection du bain liquide, etc.

L'intérêt de maîtriser le procédé vient de l'observation selon laquelle, en se solidifiant, le métal dégaze, crée des soufflures ou autres défauts dont la taille et la répartition sont reproductibles. Quand on fige une famille de paramètres, les défauts sont compris dans une plage de formes et de dimensions connues. Dans le cas du soudage des alliages de titane, les défauts sont des soufflures sphériques de dimensions généralement comprises entre 30 et 70µm.

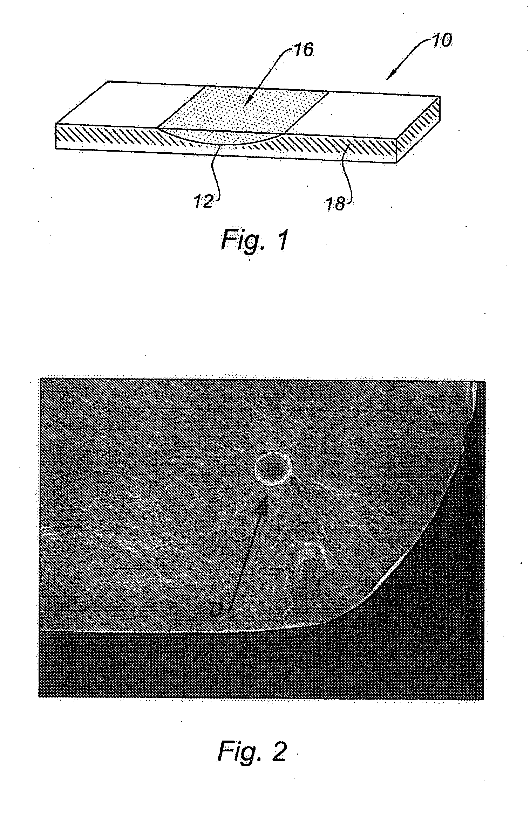

La méthode de l'invention consiste donc à pratiquer des tests de fatigue cyclique sur les éprouvettes. On découpe ainsi dans la plaque métallique 10 ainsi soudée, une éprouvette 18 correspondant à la partie hachurée sur la figure 1. L'épaisseur de cette éprouvette est inférieure à l'épaisseur du joint soudé 16 dans sa partie centrale. De cette façon, la zone médiane de l'éprouvette est constituée uniquement de la matière venue de soudage.

On réalise un nombre d'éprouvettes statistiquement suffisant. Pour des éprouvettes en alliages de titane présentant de l'ordre de 5 à 6 défauts pertinents, de taille comprise entre 30 et 70µm, ce nombre est de l'ordre de 40. Il correspond, pour une loi normale, à l'échantillonnage nécessaire à l'obtention d'une valeur à plus 3 fois l'écart-type pour la fiabilité requise en dimensionnement aéronautique (99,7%).

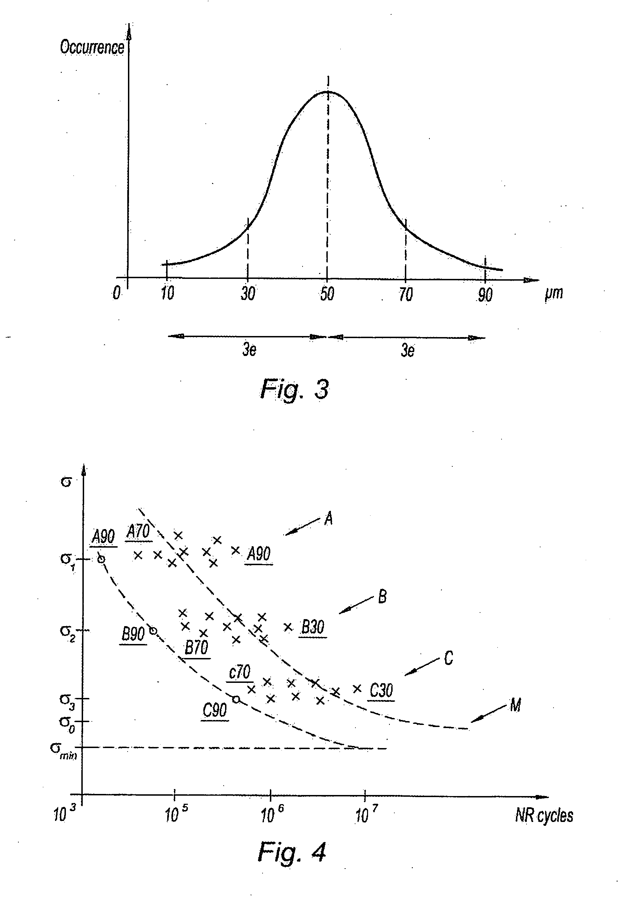

On soumet les éprouvettes à un test de fatigue vibratoire axiale. Ce test consiste à disposer l'éprouvette entre deux mâchoires distantes l'une de l'autre et à exercer sur ces dernières des efforts d'étirement axial dont l'intensité varie périodiquement, jusqu'à rupture. On relève dans un diagramme, pour chaque éprouvette, la valeur de la contrainte alternée à laquelle l'éprouvette a été soumise et le nombre de cycles au moment de la rupture. Le repère orthonormé reprend en abscisse le nombre de cycles sur une échelle logarithmiques et en ordonnées la valeur signifiante de contrainte alternée, telle que la valeur maximale. On obtient une distribution de points comme cela est représenté sur le diagramme de la figure 4. Dans cet exemple on a procédé aux essais de fatigue en appliquant trois niveaux de contraintes alternées: σ1 ; σ2 et σ3. On a ainsi trois nuages de points : A, B et C.

On effectue une fractographie de chaque éprouvette et on mesure la taille du défaut pertinent apparaissant dans le plan de rupture de l'éprouvette. Le défaut pertinent est en fait celui dont la taille était à l'origine la plus grande dans l'éprouvette car en fatigue les fissures apparaissent d'abord au niveau d'un tel défaut. Sur la figure 2 on a représenté une fractographie d'une éprouvette telle que fabriquée selon la méthode ci-dessus avec un rechargement en alliage TA6V d'une plaque en alliage Ti17. L'éprouvette a cédé après 9,5x10⁷ cycles d'un étirement cyclique sous une contrainte alternée de valeur maximale 350Mpa. Le défaut D a bien une forme sphérique et son diamètre est estimé à partir de l'échelle 200µm sur le bord de la photo.

On trace un histogramme du nombre de défauts présentant les mêmes dimensions. Sur la figure 3 on voit une représentation d'un tel histogramme on vérifie que la distribution suit une loi de gauss normale en appliquant des tests statistiques classiques (tests de variance, par exemple). Ainsi sur le diagramme de la figure 3, on constate que l'ensemble des défauts pour cette série d'éprouvettes, réalisées dans les mêmes conditions de soudage, est compris dans l'intervalle 30 µm et 70 µm. On calcule l'écart-type de cette distribution.

A partir de cette courbe on détermine par extrapolation la plage des dimensions des défauts qui s'étend entre la dimension de valeur moyenne moins trois fois l'écart-type et la dimension de valeur moyenne plus trois fois l'écart-type. Dans cet intervalle de + ou - trois fois l'écart-type, e, on trouve statistiquement 99,7% comme cela est connu.

Ainsi, ici, la dimension maximale de soufflure que l'on est susceptible de rencontrer avec une probabilité inférieure à 0,3% est de 90µm.

En se reportant à la figure 4, on peut déterminer la valeur minimale σ₁ de contrainte cyclique qui a entraîné la rupture d'une éprouvette dans le lot soumis aux tests de fatigue cyclique. On observe que, pour chacun des trois nuages de points, le diamètre maximum relevé, soit 70µm, correspond à la durée de vie la plus faible en nombre de cycles à la rupture, respectivement A70, B70 et C70. De même la valeur de diamètre de défaut de 30µm correspond à la durée de vie relevée la plus élevée : respectivement A30, B30 et C30. On observe également que ces valeurs permettent de tracer la courbe des moyennes, de type courbe de Wöhler. Cette courbe M des moyennes permet de déterminer la valeur minimale σ0 pour une durée de vie, en nombre de cycles, déterminée.

Pour chacun des ces nuages de points on détermine, à partir de l'histogramme de la figure 3, la position théorique du point correspondant au diamètre de défaut de 90µm. on obtient les points respectifs A90, B90 et C90. On trace ensuite une courbe, à partir de ces points, qui est parallèle à la courbe des moyennes.

Cette courbe permet ainsi de déterminer la valeur σₘᵢₙ pour une durée de vie déterminée.

A partir de ce point sur le diagramme on trouve aisément l'abattement par rapport à la courbe des moyennes. Il s'agit soit d'un abattement en durée de vie soit un abattement en contrainte maximale admise dans la pièce pour un nombre de cycle à rupture donné.

Il s'agit aussi de vérifier que le volume de matière testée correspond au volume de la soudure sur les pièces industrielles, notamment en réparation. En effet la quantité de défauts que l'on rencontre est liée au volume de matière fondue. Il est donc important que sur les éprouvettes réalisées la matière de l'ensemble des joints soudés (volume de matière refondue) ait un volume analogue à celui des joints soudés sur les pièces industrielles. Ce volume est compris de préférence entre 10 % et 100 % du volume du joint soudé industriel. Ce volume est choisi de manière à être « saturé » en défauts afin d'être représentatif de la population de défauts du joint industriel. Dans la pratique, ce seuil de saturation est relativement rapidement atteint en raison de la présence de très nombreux défauts pour des unités de volume de petite taille (quelques mm3).

## Revendications

1. Méthode pour évaluer la résistance en fatigue de joints soudés (16) réalisés par fusion d'un alliage selon une technique de soudage déterminée, les joints soudés (16) présentant des défauts du type soufflures en inclusion ayant une taille minimale de 40 microns et même taille 30 microns, pour des soufflures dans les alliages de Titane comprenant les étapes suivantes :
On réalise un nombre N, significatif statistiquement, d'éprouvettes (10) avec un joint soudé (16) selon ladite technique de soudage,
On soumet chacune des éprouvettes (10) à des tests de fatigue cyclique de contraintes alternées σ, jusqu'à rupture,
On mesure par fractographie la dimension du défaut (D) pertinent apparaissant dans le plan de rupture des éprouvettes (10),
On détermine à partir des dimensions mesurées, un intervalle de dimensions des défauts (D) pour lequel la probabilité de mesurer en fractographie un défaut hors de l'intervalle est inférieure à un taux t de probabilité déterminé,
On détermine à partir de cet intervalle la contrainte σₘᵢₙ la plus faible susceptible d'entraîner la rupture de l'éprouvette (10) avec un taux de probabilité t.

2. Méthode selon la revendication 1 selon laquelle on réalise des joints soudés (16) sur les éprouvettes (10) dont le volume est compris entre 10 % et 100 % des joints soudés sur une pieces (18) a assembler.

3. Méthode selon la revendication 1 appliquée à l'évaluation en fatigue d'assemblage en alliage de titane dont le nombre d'éprouvettes (10) est compris entre 35 et 45; de préférence 40.

4. Méthode selon l'une des revendications précédentes dont le taux de probabilité t est inférieur à 1 %.

5. Méthode selon l'une des revendications précédentes dont la technique de soudage met en oeuvre un faisceau laser pour fondre l'alliage.

## Claims

1. Method for evaluating the fatigue resistance of welded seams (16) created by the fusion of an alloy according to a determined welding technique, wherein the welded seams (16) have defects such as porosities or inclusions with a minimum size of 40 microns and even 30 microns for porosities in titanium alloys, comprising the following steps:
- a statistically significant number N of test parts (10) are made with a welded seam (16) according to said welding technology,
- each of the test parts (10) is subjected to cyclic fatigue tests of alternating stresses σ until they rupture,
- fractography is used to measure the dimensions of the relevant defect (D) which appears in the rupture plane of the test parts (10),
- the dimensions measured are used to determine an interval of the defect dimensions (D) for which the probability of measuring using fractography a defect outside of the interval is lower than a rate t of determined probability,
- this interval is used to determine the lowest stress σₘᵢₙ that is likely to cause the rupture of the test part (10) with a rate of probability t.

2. Method according to claim 1, according to which welded seams (16) are created on test parts (10) whose volume is between 10% and 100% of the welded seams of one of the parts to be assembled.

3. Method according to claim 1, applied to the evaluation of assembly fatigue for titanium alloy for which the number of test parts (10) is between 35 and 45; preferably 40.

4. Method according to any of the previous claims, for which the rate of probability t is below 1 %.

5. Method according to any of the previous claims, for which the welding technique uses a laser beam to melt the alloy.

## Patentansprüche

1. Verfahren zum Bewerten der Dauerhaltbarkeit von Schweißnähten (16), die durch Schmelzen einer Legierung gemäß einer bestimmten Schweißtechnik ausgebildet werden, wobei die Schweißnähte (16) Defekte nach Art von Gasblasen oder Einschlüssen aufweisen, die eine Mindestgröße von 40 Mikrometern und sogar von 30 Mikrometern für Gasblasen in Titanlegierungen aufweisen, wobei das Verfahren folgende Schritte umfasst:
- Ausbilden einer statistisch bedeutungsvollen Anzahl N von Prüfkörpern (10) mit einer Schweißnaht (16) gemäß der Schweißtechnik;
- Aussetzen eines jeden Prüfkörpers (10) an zyklische Dauerversuche mit abwechselnden Beanspruchungen σ bis zum Zerbrechen,
- Messen der Dimension des betreffenden Defekts (D), der in der Bruchebene der Prüfkörper (10) erscheint, durch Fraktographie,
- Bestimmen aus den gemessenen Dimensionen eines Dimensionsintervalls der Defekte (D), für das die Wahrscheinlichkeit, bei der Fraktographie einen Defekt außerhalb des Intervalls zu messen, kleiner als eine bestimmte Wahrscheinlichkeitsrate t ist,
- Bestimmen aus diesem Intervall der geringsten Beanspruchung σₘᵢₙ, die zum Zerbrechen des Prüfkörpers (10) mit einer Wahrscheinlichkeitsrate t führen kann.

2. Verfahren nach Anspruch 1, wobei Schweißnähte (16) auf den Prüfkörpern (10) ausgebildet werden, deren Volumen zwischen 10 % und 100 % der Schweißnähte auf einem der zu verbindenden Teile (18) liegt.

3. Verfahren nach Anspruch 1, angewendet auf die Bewertung der Dauerhaltbarkeit einer Verbindung aus Titanlegierung, wobei die Anzahl der Prüfkörper (10) zwischen 35 und 45, bevorzugt bei 40 liegt.

4. Verfahren nach einem der vorhergehenden Ansprüche, wobei die Wahrscheinlichkeitsrate t kleiner als 1 % ist.

5. Verfahren nach einem der vorhergehenden Ansprüche, wobei die Schweißtechnik einen Laserstrahl einsetzt, um die Legierung zu schmelzen.
